# DEMANDE DE BREVET EUROPEEN

(11) **EP 0 557 165 A1**
(43) Date de publication de la demande: **25.08.1993**
(21) Numéro de dépôt: 93400345.0
(22) Date de dépôt: 11.02.1993
(51) Int. Cl.: H04L 12/56

(54) **Gestion d'un ensemble d'équipements de faisceaux hertziens reliés entre aux pour constituer un réseau tactique de télécommunications**

(30) Priorité: 19.02.1992 FR 9201878
(71) Demandeur: ALCATEL TELSPACE, F-92734 Nanterre Cédex (FR)
(72) Inventeur: Destouesse, Claude, F-95100 Argenteuil (FR); Montarges, Jean, F-78330 Fontenay le Fleury (FR)
(74) Mandataire: El Manouni, Josiane

(57) **Abrégé**

Cette interface (EG) pour l'insertion d'équipements (ET) reliés en réseau de télécommunications, dit réseau de trafic, dans un système de gestion de tels équipements constitué en un réseau de télécommunications, dit réseau support de gestion, est telle qu'elle comporte, par équipement, intégrés sur un même support physique, d'une part des moyens réalisant une fonction d'interface avec ledit réseau support de gestion, d'autre part des moyens réalisant une fonction d'interface avec ledit équipement.

## Description

La présente invention se rapporte à la gestion d'un ensemble d'équipements reliés en réseau de télécommunications.

La présente invention se rapporte par exemple au cas d'un ensemble d'équipements reliés en réseau de télécommunications, selon des configurations évolutives adaptées aux besoins des utilisateurs de ce réseau, nécessitant que des informations de gestion soient échangées entre les divers constituants de ce réseau, par exemple entre un centre de gestion de ce réseau et les équipements qui constituent ce réseau.

L'invention s'applique particulièrement à la gestion d'un ensemble d'équipements de faisceaux hertziens reliés entre eux pour constituer un réseau tactique de télécommunications.

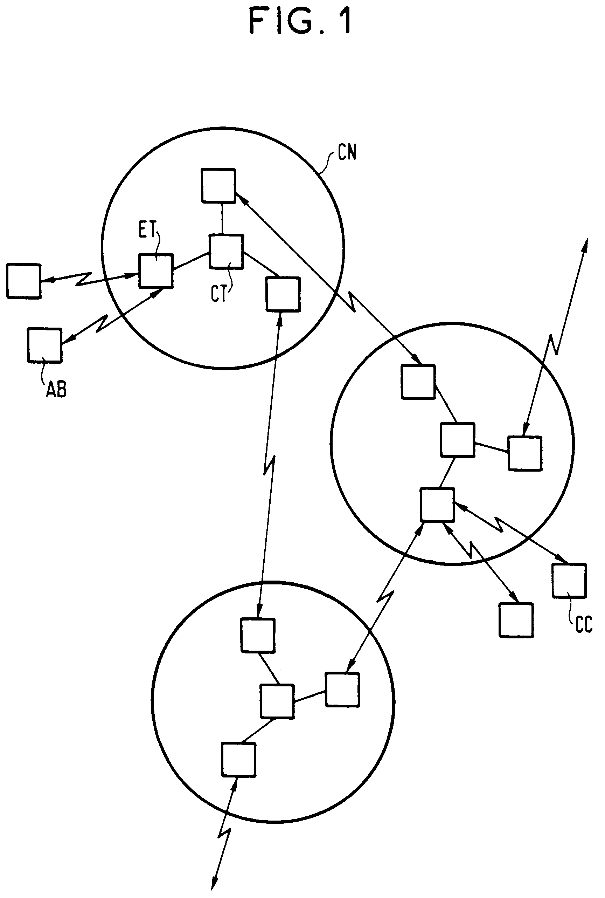

Un tel réseau tactique, illustré sur la figure 1, comporte un ensemble de centres nodaux CN situés aux noeuds de ce réseau, et comportant eux-mêmes chacun un organe de commutation, ou commutateur, CT, raccordé à une pluralité d'équipements, ET, constitués en l'occurrence par des équipements de faisceaux hertziens et raccordés à leur tour soit à des utilisateurs, AB, de ce réseau, soit à d'autres équipements ET appartenant à d'autres centres nodaux de ce réseau, pour constituer un réseau maillé.

Une telle transmission par faisceaux hertziens est avantageusement utilisée dans un réseau tactique car elle permet de reconfigurer ce réseau au gré des agressions extérieures auxquelles il est soumis, par simple déplacement d'un ou plusieurs de ses centres nodaux au fur et à mesure de ces agressions.

L'adaptation d'un réseau tactique de télécommunications aux besoins des utilisateurs qui, pour les applications militaires, comporte la résistance aux agressions extérieures, requiert que des informations de gestion soient échangées entre les divers constituants du réseau, et en particulier entre une entité appelée centre de commandement, ou plus généralement centre de gestion, du réseau, et les équipements qui constituent ce réseau, et dont le centre de commandement de réseau doit contrôler le fonctionnement et la manoeuvre.

Ces informations de gestion sont généralement échangées dans les deux sens, à savoir depuis les équipements gérés vers le centre de commandement, et depuis le centre de commandement vers les équipements gérés, étant généralement dites de télésurveillance, ou d'alarme, dans le premier cas, et de télécommande dans le deuxième cas, et s'appliquant dans tous les cas à des paramètres de fonctionnement des équipements gérés tels que fréquence, puissance, débit...etc.

Il est par exemple connu de transmettre de telles informations de gestion en utilisant un réseau de télécommunications dit support de gestion par opposition à celui, dit de trafic dont il a été question jusqu'à présent, et sur lequel sont transmises les informations dites de trafic. Ce réseau support de gestion peut être confondu avec le réseau de trafic, auquel cas la gestion se comporte comme un groupe d'utilisateurs particuliers de ce réseau. Il est également connu, pour des réseaux de trafic d'infrastructure fixe, d'utiliser un réseau support de gestion distinct du réseau de trafic, pour éviter des situations de blocage en cas de défaillance de ce réseau de trafic. Par ailleurs, il est également connu d'acheminer des informations de gestion sur des voies de servitude établies en paralléle des voies de trafic. A titre d'exemple, dans le cas d'un réseau utilisant des faisceaux hertziens, cette mise en parallèle peut être assurée par un multiplexage dans la trame hertzienne.

Dans ces différents cas, l'acheminement des informations de gestion est ainsi le plus souvent de type point à point entre les équipements gérés et le centre de gestion.

Il est par ailleurs connu d'associer à un équipement à gérer, pour son insertion dans un réseau support de gestion, d'une part des moyens dédiés à la réalisation des fonctions d'interface avec le réseau de télécommunications formant ce réseau support de gestion, et d'autre part des moyens dédiés à la réalisation des fonctions d'interface avec cet équipement.

La présente invention a pour but la réunion sur un même support pysique, composant ou carte de composants suivant le dégré d'intégration, de ces deux fonctions d'interface.

La présente invention a pour objet une interface permettant aisément l'insertion d'équipement reliés en réseau de télécommunications, dit réseau de trafic, dans un système de gestion des dits équipements constitué par un réseau de télécommunications, dit réseau support de gestion. Suivant l'invention, cette interface est essentiellement caractérisée en ce qu'elle comporte, par équipement, intégrés sur un même support physique, d'une part des moyens réalisant une fonction d'interface avec ledit réseau support de gestion, d'autre part des moyens réalisant une fonction d'interface avec ledit équipement.

La présente invention s'applique avantageusement à une architecture particulière de système de gestion, différente de celles rappelées plus haut et permettant d'obtenir une plus grande sûreté de transmission pour les informations de gestion notamment en cas d'agression extérieure contre le réseau, dit de trafic, en lequel sont assemblés lesdits équipements, ou pendant les manoeuvres de reconfiguration de ce réseau.

Suivant une autre caractéristique de l'invention ledit réseau support de gestion comportant des noeuds constitués par des équipements dits d'accès et de commu-tation d'informations de gestion, associés respectivement aux équipements à gérer, et assemblés pour former un réseau maillé topologiquement indépendant du réseau de trafic et utilisant une diffusion par inondation, ladite interface est formée par un équipement d'accès et de commutation d'infor-mations de gestion, et comporte en outre des moyens réalisant une fonction de commutation d'informations de gestion.

Suivant une autre caractéristique de l'invention, ladite fonction de commutation d'informations de gestion est également intégrée sur le même support.

D'autres objets et caractéristiques de la présente invention apparaîtront à la lecture de la description suivante d'un exemple de réalisation, faite à titre d'exemple dans le cas de l'application à un réseau tactique de télécommunications utilisant des faisceaux hertziens, et de l'architecture particulière de système de gestion mentionnée plus haut, et en relation avec les dessins ci-annexés dans lesquels, outre la figure 1 déjà décrite et relative à l'art antérieur,
- la figure 2 est un schéma d'un centre nodal dans un réseau tactique de télécommunications dont les équipements à gérer sont munis d'interfaces suivant l'invention,
- la figure 3 est un schéma d'un équipement dit d'accès et de commutation d'informations de gestion, formant dans le cas de ladite architecture particulière de système de gestion, une interface suivant l'invention.

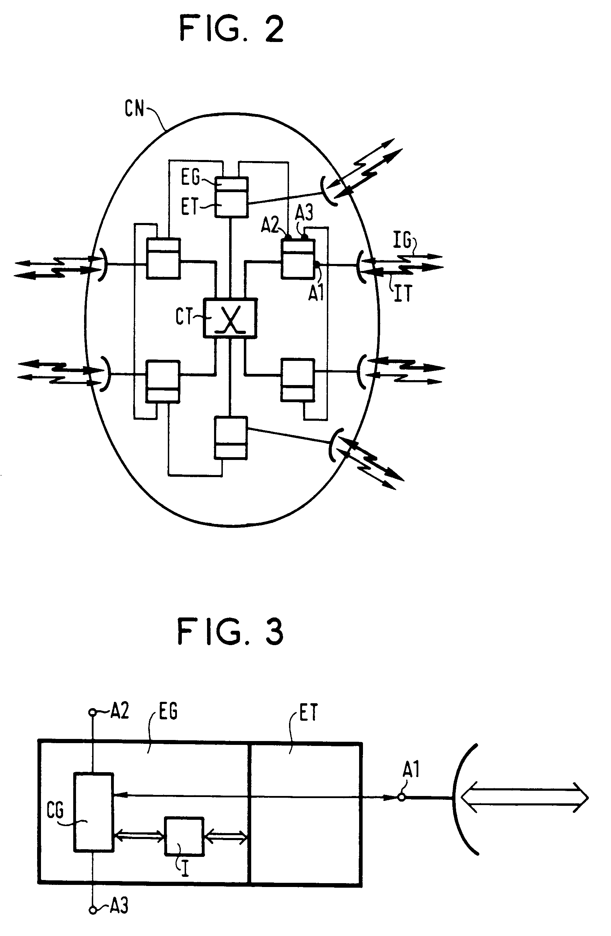

Le centre nodal CN représenté schématiquement sur la figure 2 comporte un commutateur, dit de trafic, CT, raccordé à une pluralité d'équipements dits de transmission d'informations de trafic ET, pris à titre d'exemple en nombre égal à six, et constituant les équipements à gérer.

Chaque équipement de transmission d'informations de trafic ET est associé à un équipement dit d'accès et de commutation d'informations de gestion, noté EG. Ces équipements d'accès et de commutation d'informations de gestion EG constituent les noeuds d'un réseau de télécommunications, dit support de gestion par opposition à celui, dit de trafic, sur lequel sont acheminées les informations de trafic échangées entre utilisateurs du réseau.

Chaque équipement d'accès et de commutation d'informations de gestion EG est en l'occurrence muni de trois accès à ce réseau support de gestion, dits accès réseau, par l'intermédiaire desquels il peut être relié à trois autres équipements d'accès et de commutation d'informations de gestion EG de ce réseau support de gestion, et d'un accès (non référencé spécifiquement sur la figure 2) par l'intermédiaire duquel il est relié à l'équipement géré, cet accès étant dit accès équipement.

La liaison de l'équipement EG considéré à un équipement EG d'un autre centre nodal (non représenté) de ce réseau, par l'un des accès réseau, noté A1, se fait en l'occurrence à travers l'équipement de transmission ET associé, et en l'occurrence par une liaison hertzienne.

Les deux autres accès réseau, notés A2, A3, sont reliés, en l'occurrence par des liaisons filaires, à deux autres équipements EG de ce même centre nodal, qui sont en l'occurrence les deux équipements EG les plus proches de cet équipement.

On notera que le nombre d'accès réseau pourrait être choisi supérieur à trois sans sortir du cadre de la présente invention.

On notera de même que le nombre d'équipements gérés ET associés à un même équipement de gestion EG pourrait être choisi supérieur à 1 sans sortir du cadre de la présente invention, auquel cas l'équipement EG serait muni d'un nombre correspondant d'accès équipements.

L'accès A1 étant en l'occurrence connecté à travers l'équipement ET associé, les informations de trafic, notées IT, et de gestion, notées IG, sont en l'occurrence transmises sur des voies différentes d'une même liaison hertzienne, comme illustré de façon schématique sur la figure 2.

Sans sortir du cadre de l'invention, cet accès A1 pourrait être connecté sur une liaison filaire comme les accès A2 et A3.

L'ensemble formé par les différents équipements EG ainsi reliés forme ainsi un réseau maillé, dit réseau support de gestion, assurant la transmission d'informations de gestion entre le centre de commandement du réseau d'une part, et les équipements d'accès et de commutation d'informations de gestion ainsi associés respectivement aux différents équipements de transmission d'informations de trafic, d'autre part.

On notera que le centre de commandement (CC) peut être considéré comme un équipement d'accès et de commutation d'informations de gestion particulier, et peut ainsi être déplacé au sein du réseau support de gestion et au gré des reconfigurations de ce réseau.

L'équipement EG représenté sur la figure 3 comporte un commutateur, dit commutateur de gestion, CG, ayant pour accès réseau les accès A1, A2, A3 et destiné à assurer l'acheminement, sur ce réseau de gestion, des informations de gestion émises par l'équipement géré (ET) ou par le centre de commandement (CC).

L'accès de ce commutateur de gestion à l'équipement géré (ET) se fait à travers une interface I destinée à mettre les informations de gestion reçues sur les accès réseau A1, A2 et A3 et destinées à l'équipement ET sous une forme adaptée à leur réception par cet équipement, ou inversement les informations de gestion émises par cet équipement ET sous une forme adaptée à leur transmission sur les accès A1, A2 et A3 du commutateur de gestion.

L'acheminement des informations de gestion sur ce réseau support de gestion est réalisé suivant le mode connu de diffusion dit "par inondation", suivant lequel un équipement EG qui reçoit de telles informations sur l'un de ces trois accès réseau les réemet une fois sur les deux autres accès, ce qui permet de garantir une redondance d'acheminement pour ces informations. Si un équipement EG est lui même à l'origine des informations ainsi émises il les transmet directement sur les trois accès réseau.

Le commutateur de gestion CG sera par exemple constitué, dans le cas d'une transmission des informations de gestion suivant le mode de transmission connu dit par paquets, par un commutateur de paquets, l'interface I étant alors constituée par un empaqueteur-désempaqueteur. Ce commutateur de gestion, de faible capacité compte tenu de son nombre limité d'accès, et cette interface, seront avantageusement réalisés sur un seul et même support, composant ou carte de composants (suivant le degré d'intégration).

Par exemple, dans le cas de réalisation sur une carte, cette dernière intègre d'une part des moyens réalisant une fonction d'interface avec l'équipement géré et avec le réseau de gestion, et d'autre part une fonction de commutation de messages de gestion, en l'occurrence une fonction de commutation de paquets, selon la technique du routage par inondation.

Au niveau de l'interface avec l'équipement géré, cette carte réalise la mise au format des messages de télésurveillance et de télécommande, à l'entrée et à la sortie de l'équipement géré.

Au niveau de l'interface avec le réseau de gestion, cette carte assure:
- l'envoi des messages de télésurveillance provenant de l'équipement,
- la reconnaissance des messages destinés à l'équipement géré et leur traitement pour être dirigés sur cet équipement,
- la gestion des acquittements des messages correspondant à l'équipement géré.

Par ailleurs, cette carte peut être soit intégrée à l'équipement à gérer, soit disposée dans un coffret extérieur.

## Revendications

**1/** Interface pour l'insertion d'équipements reliés en réseau de telecommunications, dit réseau de trafic, dans un système de gestion de tels équipements constitue en un réseau de telecommunications, dit réseau support de gestion, caractérisée en ce qu'elle comporte, par équipement, intégrés sur un même support physique, d'une part des moyens réalisant une fonction d'interface avec ledit réseau support de gestion, d'autre part des moyens réalisant une fonction d'interface avec ledit équipement.

**2/** Interface selon la revendication 1, caractérisée en ce que ledit réseau support de gestion comportant des noeuds constitues par des équipements dits d'accès et de commutation d'informations de gestion (EG), associés respectivement aux équipements à gérer (ET), et assemblés pour former un réseau maille topologiquement indépendant du réseau de trafic et utilisant une diffusion par inondation, ladite interface est formée par un desdits équipements d'accès et de commutation d'informations de gestion, et comporte en outre des moyens réalisant une fonction de commutation d'informations de gestion.

**3/** Interface selon la revendication 2, caractérisée en ce que ladite fonction de commutation d'informations de gestion est également intégrée sur le même support.
